# EUROPÄISCHE PATENTSCHRIFT

(11) **EP 2 392 768 B1**
(45) Veröffentlichungstag und Bekanntmachung des Hinweises auf die Patenterteilung: **28.08.2013**
(21) Anmeldenummer: 10165033.1
(22) Anmeldetag: 07.06.2010
(51) Int. Cl.: E21B 21/06, E21B 21/07, E21B 49/00, G01N 1/08, G01N 15/02, G01N 33/24

(54) **Verfahren und Vorrichtung zur Erhöhung einer Ausbeute einer Lagerstätte**
Method and device for increasing the yield from a mineral deposit
Procédé et dispositif d'augmentation du rendement d'un site de stockage

(43) Veröffentlichungstag der Anmeldung: 07.12.2011
(73) Patentinhaber: Siemens Aktiengesellschaft, 80333 München (DE)
(72) Erfinder: Mütze, Thomas, 09599 Freiberg (DE); Röntzsch, Silke, 01900 Großröhrsdorf (DE)

(56) Entgegenhaltungen:
- WO-A1-2010/000055
- WO-A2-2009/105469
- US-A- 2 082 329
- US-A- 2 167 393
- US-A- 3 528 514
- US-A- 3 645 131
- US-A- 3 887 020
- US-A- 4 098 698
- US-A1- 2003 182 997

## Beschreibung

Die Erfindung betrifft ein Verfahren und eine Vorrichtung zur Erhöhung der Ausbeute einer Lagerstätte umfassend ein Gestein, das ein durch Zerkleinerung des Gesteins freizulegendes Wertstoff-Mineral und mindestens ein weiteres Mineral umfasst, wobei das Wertstoff-Mineral eine höhere Dichte aufweist als das mindestens eine weitere Mineral.

Um eine Lagerstätte effizient auszubeuten, muss das im Gestein enthaltene Wertstoff-Mineral freigelegt und möglichst vollständig abgetrennt werden. Je nach Mineralkorngröße eines Wertstoff-Minerals sind zu seiner Freilegung unterschiedliche Zerkleinerungsgrade des Gesteins erforderlich. So muss ein Gestein mit Mineralen einer hohen Mineralkorngröße zur Freilegung des Wertstoff-Minerals weniger zerkleinert werden als ein Gestein mit Mineralen geringerer Mineralkorngröße.

Unter der "Mineralkorngröße" des Wertstoff-Minerals wird dabei nicht die Korngröße der Kristallite dieses Minerals verstanden, sondern die lokale räumliche Ausdehnung der Phase an Wertstoff-Mineral im Gestein.

Bisher wurde das abgebaute Gestein auf eine mittlere Mineralkorngröße zerkleinert, wobei ein erster Teil des Gesteins, der ein Wertstoff-Mineral mit einer hohen Mineralkorngröße umfasst, unnötig stark zerkleinert wird, und ein zweiter Teil des Gesteins, der ein Wertstoff-Mineral mit einer geringeren Mineralkorngröße umfasst, ungenügend zerkleinert wird. Die unnötig starke Zerkleinerung des ersten Teils des Gesteins führt zu einem unnötig hohen Energieverbrauch für den Zerkleinerungsvorgang. Dagegen führt die ungenügende Zerkleinerung des zweiten Teils des Gesteins zu einer unzureichenden Freilegung und in Folge zu einer unzureichenden Abtrennbarkeit des Wertstoff-Minerals und somit einer ineffektiven Ausbeutung der Lagerstätte.

Die Mineralkorngröße und Verteilung von Mineralien in einem Gestein wird bisher zeitaufwendig dadurch bestimmt, dass in einer Lagerstätte an verschiedenen Orten Gesteinsproben entnommen und analysiert werden. Dazu werden in Lagerstätten etwa faustgroße Gesteinsbrocken gesammelt und/oder in einem groben Raster Erkundungsbohrungen durchgeführt, um auswertbare Bohrkerne zu erhalten. Diese Gesteinsproben werden im Labor hinsichtlich ihrer mineralogischen und chemischen Zusammensetzung analysiert. Während die chemische Analyse im wesentlichen Art und Umfang der enthaltenen Elemente bestimmt, wird in der mineralogischen Analyse Art und Umfang der enthaltenen Minerale sowie ihre räumliche Anordnung ermittelt. Zur Bestimmung der räumlichen Anordnung der Minerale werden die Gesteinsproben in Richtung definierter Raumachsen angeschliffen. Durch eine optische Analyse der Dünn- oder Anschliffe, beispielsweise unter einem Mikroskop, lässt sich die räumliche Anordnung und Verteilung der Minerale im Gestein erkennen. Eine räumlich weit verteilte Anordnung der Minerale geht mit einer geringen Mineralkorngröße der Minerale einher, während Zusammenballungen von Mineralen an bestimmten Stellen mit einer höheren Mineralkorngröße einhergehen.

Hinsichtlich des Aufbaus einer Lagerstätte bzw. der räumlichen Mineralkorngrößenverteilung des Wertstoff-Minerals in der Lagerstätte können auf diese Weise nur wenige Informationen, und diese nur mit beträchtlicher zeitlicher Verzögerung, bereitgestellt werden.

Eine Lagerstättenmodellierung, d.h. die Erstellung eines Modells der Lagerstätte umfassend die dreidimensionale Aufzeichnung von Gesteinsschichten oder Gesteinsformationen mit unterschiedlicher Mineralkorngröße des Wertstoff-Minerals, ist aufgrund der geringen verfügbaren Menge an Informationen nur begrenzt möglich. Ein auf das lokal vorliegende Gestein, d.h. seinen Gehalt an Wertstoff-Mineral und dessen Mineralkorngröße ausgerichtetes Abbauen und Zerkleinern des Gesteins ist somit nur eingeschränkt möglich.

Die WO 2010/000055 A1 offenbart ein Verfahren und eine Vorrichtung zur, insbesondere kontinuierlichen, vor-Ort Analyse von Bohrklein aus Bohrschlamm. Es wird eine Probe des Bohrkleins, welche repräsentativ für die durchbohrte Gesteinsformation ist, entnommen und hinsichtlich der Art des Gesteins und der chemischen Zusammensetzung analysiert. Gegebenenfalls werden auch Bohrparameter, umfassend die Bohrtiefe, Gammastrahlemissionen und/oder weitere Parameter protokolliert und mit den Analyseergebnissen der Probe korreliert.

Die US 3528514 A offenbart eine Vorrichtung zum Bohren von Gestein. Dabei sind unterschiedliche Verfahren beschrieben, am Bohrer anfallendes Bohrklein aus dem Bohrloch herauszuführen. So wird Luft, Wasser oder Vakuum eingesetzt, um das Bohrklein auszutragen. Im Zusammenhang mit einer Nutzung von Vakuum wird eine nachfolgende Abscheidung des Bohrkleins mittels eines Zyklons beschrieben. Das Bohrklein wird zur Gewinnung mineralogischer Daten des Gesteins eingesetzt.

Es ist Aufgabe der Erfindung, ein Verfahren und eine Vorrichtung anzugeben, mit welchen die Ausbeute einer Lagerstätte erhöht wird.

Die Aufgabe wird gelöst durch ein Verfahren zur Erhöhung einer Ausbeute einer Lagerstätte umfassend ein Gestein, das ein durch Zerkleinerung des Gesteins freizulegendes Wertstoff-Mineral und mindestens ein weiteres Mineral umfasst, wobei das Wertstoff-Mineral eine höhere Dichte aufweist als das mindestens eine weitere Mineral, umfassend folgende Schritte:
- Durchführen eines Bohrvorgangs mittels eines Bohrgeräts vor einem Abbau des Gesteins, wobei Bohrklein erzeugt wird,
- Bilden eines Aerosols umfassend das Bohrklein und einen Gasstrom,
- Überführen des Aerosols vom Bohrgerät zu mindestens einem Windsichter,
- Durchführen einer Stromklassierung, wobei mindestens zwei Fraktionen umfassend jeweils gleichfällige Partikel des Bohrkleins gebildet werden, und
- Bestimmen einer Eigenschaft mindestens einer der Fraktionen, welche als ein Maß zur Einstellung eines optimalen Zerkleinerungsgrades des Gesteins verwendet wird.

Die Aufgabe wird durch eine Vorrichtung zur Durchführung des erfindungsgemäßen Verfahrens gelöst, umfassend
- mindestens ein Zerkleinerungsaggregat zur Zerkleinerung des Gesteins, wobei ein Zerkleinerungsgrad des Gesteins veränderbar ist,
- mindestens eine Steuer- und/oder Regelungseinheit zur Einstellung des optimalen Zerkleinerungsgrads an dem mindestens einen Zerkleinerungsaggregat,
- mindestens ein Bohrgerät,
- mindestens eine Einheit zur Bereitstellung des Gasstroms, welche über mindestens eine Gasleitung mit dem mindestens einen Bohrgerät verbunden ist,
- mindestens einen Windsichter pro Bohrgerät, der mit dem mindestens einen Bohrgerät über mindestens eine Aerosolleitung verbunden ist,
- mindestens eine Einrichtung zur Bestimmung mindestens einer Eigenschaft der Fraktionen, und
- mindestens eine Recheneinheit zur Erfassung der mindestens einen bestimmten Eigenschaft der Fraktionen, welche das Maß zur Ermittlung des optimalen Zerkleinerungsgrads bildet, und optional zur Übermittlung mindestens einer anhand des Maßes ermittelten Stellgröße an die mindestens eine Steuer-und/oder Regelungseinheit zur Einstellung des optimalen Zerkleinerungsgrads am mindestens einen Zerkleinerungsaggregat.

Die Erfindung nutzt die Erkenntnis, dass die Eigenschaften von Bohrklein, das von einem Bohrgerät während eines Bohrvorgangs erzeugt wird, in direktem Zusammenhang mit der Mineralkorngröße der Minerale stehen, die in dem durchbohrten Gestein vorhanden sind. Eine gezielte Auswertung stromklassierter Fraktionen des Bohrkleins ermöglicht in überraschender Weise hinreichend genaue Rückschlüsse auf die im durchbohrten Gestein vorliegenden Mineralkorngrößen und ermöglicht eine schnelle und unkomplizierte Ermittlung und Einstellung des für das durchbohrte Gestein optimalen Zerkleinerungsgrads. Als optimaler Zerkleinerungsgrad wird dabei ein Zerkleinerungsgrad für das jeweilige Gestein angesehen, bei dem bis zur Freilegung des mindestens einen enthaltenen Wertstoff-Minerals zerkleinert wird, jedoch nicht darüber hinaus.

Das Verfahren und die Vorrichtung ermöglichen eine besonders schnelle und hinreichend genaue Anpassung des Zerkleinerungsgrads an die lokal vorliegende Mineralkorngröße des Wertstoff-Minerals im Gestein. Die Zuordnung des optimalen Zerkleinerungsgrads zu dem durchbohrten Gestein erfolgt während des Bohrvorgangs, so dass die Daten pro Bohrloch teufenabhängig und zeitnah zu Verfügung stehen. Anstelle der Auswertung der bei Kernbohrungen erhaltenen Bohrkerne zur Ermittlung der jeweiligen Gesteinsstruktur kann bei der Erkundung einer Lagerstätte nun einfach das Bohrklein analysiert werden. Die Anzahl der Bohrlöcher kann deutlich erhöht werden, nachdem keine aufwendigen Laboranalysen an Bohrkernen mehr erforderlich sind. Insbesondere können nun auch Bohrungen zur Anbringung von Sprenglöchern zur Ermittlung der jeweiligen Gesteinsstruktur genutzt werden, die in einem engeren Raster als Erkundungsbohrungen gesetzt werden. Sprenglöcher werden typischerweise in einem horizontalen Abstand von 2 bis 5 m abgeteuft, wobei Daten mit einer vertikalen Auflösung im dm-Bereich bereitgestellt werden können. Auf diese Weise ist eine besonders schnelle und genaue Lagerstättenmodellierung und in Folge ein besonders effizienter Abbau der Lagerstätte möglich.

Nachdem zwischen der Entstehung des Bohrkleins und der Auswertung der Eigenschaften der stromklassierten Fraktionen des Bohrkleins vor allem aufgrund der vorhandenen Förderstrecke des Aerosols zwischen Bohrmeißel und Windsichter eine geringe zeitliche Differenz besteht, muss diese bei der Modellbildung natürlich berücksichtigt werden, um dem Gestein lokal die richtige Mineralkorngröße und in Folge den optimalen Zerkleinerungsgrad zuordnen zu können.

In einer bevorzugten Ausgestaltung des Verfahrens erfolgt das Bestimmen der Eigenschaft, indem eine Partikelgrößenanalyse an den gleichfälligen Partikeln der Fraktionen durchgeführt wird, wobei mindestens in einer der Fraktionen zwei Partikelfraktionen mit unterschiedlichen mittleren Partikelgrößen erhalten werden, die durch eine Ausfallkörnung voneinander getrennt sind, wobei die Partikelgrößen d einer ersten Partikelfraktion proportional einer lokalen Mineralkorngröße des Wertstoff-Minerals in dem Gestein sind und als Maß zur Einstellung des optimalen Zerkleinerungs-grades des Gesteins verwendet werden.

Die Partikelgrößenverteilung in den stromklassierten Fraktionen des Bohrkleins steht in direktem Zusammenhang mit der Mineralkorngröße der Minerale, die in dem durchbohrten Gestein vorhanden sind. Eine gezielte Auswertung insbesondere der Partikelgrößenverteilung einer stromklassierten Fraktion des Bohrkleins ermöglicht überraschender Weise hinreichend genaue Rückschlüsse auf die im durchbohrten Gestein vorliegenden Mineralkorngrößen.

Im Fall, dass Partikelgrößenanalysen von mindestens zwei Fraktionen jeweils eine Ausfallkörnung zeigen, wird diejenige erste Partikelfraktion als Maß verwendet, die aus der Fraktion stammt, bei der die Ausfallkörnung am größten ist, bzw. bei der der Abstand zwischen den mittleren Partikelgrößen der Partikelfraktionen am größten ist.

Generell wird es derzeit für das Verfahren als erforderlich angesehen, dass das Wertstoff-Mineral im Gestein mindestens die 1,5-fache Dichte des weiteren Minerals aufweist. Bei geringeren Dichteunterschieden ergeben sich bei der Partikelgrößenanalyse einer der nach der Stromklassierung erhaltenen Fraktionen des Bohrkleins keine eindeutig voneinander zu unterscheidenden bzw. auswertbaren Partikelfraktionen.

Vorzugsweise wird als Wertstoff-Mineral ein Erzmineral durch Zerkleinerung des Gesteins freigelegt. Als "Erze" werden natürlich vorkommende Mineralaggregate von wirtschaftlichem Interesse bezeichnet, aus denen durch Bearbeitung ein oder mehrere Wertstoffe extrahiert werden können. Meistens sind dies Minerale, die mehr oder weniger metallische Bestandteile, wie zum Beispiel Eisen, Kupfer, Nickel, Zinn, Zink, Silber, Gold usw. enthalten.

In einer besonders bevorzugten Ausgestaltung des Verfahrens erfolgt die Partikelgrößenanalyse der ausgewählten Fraktion automatisch mittels einer optischen Analyse, besonders bevorzugt mittels Laserbeugung. Dabei werden die Partikel der ausgewählten Fraktion optisch gezählt und vermessen. Insbesondere erfolgt die optische Analyse der gleichfälligen Partikel der ausgewählten Fraktion kontinuierlich während ihres Falls, beispielsweise direkt am entsprechenden Ableitkanal für die Fraktion am Windsichter. So liegt das Ergebnis der Analyse in einem besonders engen zeitlichen Zusammenhang mit der Bohrung an einer bestimmten Position im Gestein vor und kann in Kenntnis der Fördergeschwindigkeit des Bohrkleins vom Bohrmeißel zum Windsichter und zu der optischen Analyse in einfacher Weise rechnerisch berücksichtigt werden. Alternativ ist beispielsweise auch eine Siebanalyse einer stromklassierten Fraktion des Bohrkleins möglich, um eine Partikelgrößenanalyse durchzuführen. Allerdings ist dieses Vorgehensweise deutlich langsamer.

Es ist von Vorteil, wenn während des Bohrvorgangs eine Teufe eines Bohrmeißels des Bohrgeräts und/oder Positionsdaten zur Position des Bohrgeräts in der Lagerstätte erfasst und logisch mit dem an dieser Stelle ermittelten Maß zur Einstellung des optimalen Zerkleinerungsgrades des Gesteins verknüpft werden, und dass an dieser Stelle abgebautes Gestein gemäß dem ermittelten Maß zerkleinert wird.

In Kenntnis der in allen drei Dimensionen der Lagerstätte vorliegenden Mineralkorngrößenverteilung des mindestens einen Wertstoff-Minerals in der Lagerstätte ist eine äußerst genaue Lagerstättenmodellierung möglich, die bereits eingangs erläutert wurde. Um die aktuelle Position des Bohrgeräts während einer Bohrung in der Lagerstätte möglichst genau zu ermitteln, wird insbesondere die Bohrlochneigung gemessen und die Position des Bohransatzpunktes, bevorzugt mittels mindestens einer GPS-Einheit, erfasst.

Die Vorrichtung umfasst bevorzugt weiterhin ein Abbaugerät zum Abbau des Gesteins und/oder zum Fördern bereits in einer Sprengung grob vorzerkleinerten Gesteins, das ebenfalls mindestens eine GPS-Einheit aufweist.

Die Positionsdaten eines Abbaugeräts werden insbesondere durch eine Datenübermittlung per Funk an die mindestens eine Recheneinheit übermittelt. Das Abbaugerät zum Abbau des Gesteins kann durch einen Unstetigbagger, insbesondere einen Löffelbagger oder Flachbagger, oder einen Stetigbagger, wie einen Schaufelradbagger oder Eimerkettenbagger, oder dergleichen gebildet sein.

Ein Abbaugerät zum Fördern von bereits mittels einer Sprengung grob vorzerkleinerten Gesteins kann durch einen Radlader gebildet sein. Das herausgelöste bzw. abgesprengte Gestein wird üblicherweise über ein Materialversorgungssystem verwaltet, in welchem die Lage oder der Lagerplatz des gesprengten Gesteins hinterlegt ist, und über welches der Radlader angesteuert werden kann. Das abgebaute oder abgesprengte Gestein wird, gegebenenfalls nach Zwischenlagerung, auf Muldenkipper oder Förderbänder aufgegeben und zu dem mindestens einen Zerkleinerungsaggregat befördert oder direkt in das mindestens eine Zerkleinerungsaggregat befördert, wo eine weitere Zerkleinerung des Gesteins bis zum Aufschluss des Wertstoff-Minerals erfolgt.

Bevorzugt werden am Bohrgerät mindestens ein vorgegebener Bohrparameter und mindestens ein, ein aktuelles Bohrverhalten des Bohrgeräts charakterisierender Messwert erfasst. Daraufhin wird vorzugsweise eine Abhängigkeit des mindestens einen Messwerts von dem mindestens einen Bohrparameter rechnerisch eliminiert und mindestens ein sich ergebender Gesteinstextur-abhängiger Kennwert als ein weiteres Maß zur Einstellung eines optimalen Zerkleinerungsgrades des Gesteins verwendet. Dies verbessert die Genauigkeit der Mineralkorngrößenanalyse und in Folge die Ermittlung des optimalen Zerkleinerungsgrads.

Der mindestens eine Bohrparameter wird beispielsweise aus einem Andruck des Bohrmeißels des Bohrgeräts, einer Drehzahl des Bohrmeißels, einem Bohrmeißelmaterial, einem Gasvolumenstrom des Gasstroms, einer Schlagfrequenz des Bohrmeißels, und dergleichen gebildet. Die Schlagfrequenz ergibt sich dabei unter anderem aus Andruck- und Gasstromdaten.

Der mindestens eine, das aktuelle Bohrverhalten charakterisierende Messwert wird insbesondere aus der Gruppe an Messwerten umfassend eine Bohrgeschwindigkeit, ein resultierendes Drehmoment am Kraftdrehkopf des Bohrmeißels, einen Gasdruck des Gasstroms, einen Energieeintrag in das Bohrgerät, ein Schwingverhalten eines Bohrgestänges des Bohrgeräts und dergleichen ausgewählt.

So ist beispielsweise die Bohrgeschwindigkeit unter anderem von der Festigkeit und Zusammensetzung des durchbohrten Gesteins abhängig, wobei eine hohe Festigkeit und/oder eine Anhäufung harter Minerale eine Verringerung der Bohrgeschwindigkeit zur Folge haben. Weiterhin ist die Bohrgeschwindigkeit aber davon abhängig, welches Bohrgerät und Bohrwerkzeug eingesetzt wird. Insbesondere sind hier der Typ, die Geometrie und der Verschleißzustand des Bohrmeißels von Bedeutung. Diese Bohrparameter sind natürlich bei der Bewertung der Bohrgeschwindigkeit zu berücksichtigen.

Die mindestens eine Recheneinheit der Vorrichtung ist datentechnisch mit der mindestens einen Einrichtung verbunden. Darunter wird entweder eine Verbindung mittels einer Verkabelung, insbesondere aber eine drahtlose Funkverbindung verstanden. Eine drahtlose Datenübermittlung zur mindestens einen Recheneinheit ermöglicht eine vor Staub und Erschütterungen geschützte Anordnung der Recheneinheit in räumlicher Trennung vom Bohrgeschehen.

Die mindestens eine Recheneinheit der Vorrichtung ist bevorzugt weiterhin zur Erfassung des mindestens einen Bohrparameters oder des mindestens einen, das aktuelle Bohrverhalten des Bohrgeräts charakterisierenden Messwerts am Bohrgerät eingerichtet. Dazu können am Bohrgerät vorhandene Sensoren verwendet oder an das Bohrgerät zusätzliche Sensoren angebaut werden.

Die mindestens eine Recheneinheit ist weiterhin mit Vorteil dazu eingerichtet, eine Abhängigkeit des mindestens einen, ein aktuelles Bohrverhalten des Bohrgeräts charakterisierenden Messwerts von dem mindestens einen Bohrparameter rechnerisch zu eliminieren und den mindestens einen Gesteinstexturabhängigen Kennwert zu errechnen, welcher ein weiteres Maß für die lokale Mineralkorngröße des Wertstoff-Minerals bildet. Die rechnerische Eliminierung der Abhängigkeit von den Bohrparametern erfordert eine überschaubare Anzahl von Vorversuchen, in welchen die einzelnen Einflussgrößen ermittelt und miteinander korreliert werden. Die auf diese Weise erstellte Datenbasis wird auf der mindestens einen Recheneinheit hinterlegt und dient zur Ermittlung des lediglich von der Gesteinstextur abhängigen Kennwerts.

Weiterhin ist die mindestens eine Recheneinheit bevorzugt dazu eingerichtet, die Stellgröße anhand des Maßes und des weiteren Maßes zu ermitteln. Dadurch kann der optimale Zerkleinerungsgrad noch genau gewählt werden.

Die bestimmte Eigenschaft der stromkassierten Fraktionen des Bohrkleins wird aber nicht nur als Maß zur Ermittlung eines optimalen Zerkleinerungsgrads und zu dessen Einstellung verwendet, sondern kann auch generell zur Steuerung des Abbaubetriebs verwendet werden. Insbesondere werden die Daten weiterhin zur Steuerung eines Sprengbetriebs und/oder eines Transportbetriebs und/oder eines Materialverwaltungsbetriebs im Bereich der Lagerstätte eingesetzt. Beispielsweise kann so eine Menge an Sprengstoff örtlich der Zusammensetzung und Festigkeit des Gesteins angepasst werden, das abgebaute Gestein entsprechend seiner Eigenschaften gezielt verwaltet werden, insbesondere hinsichtlich Lagerung und Transport, wobei ein geeignetes Materialverwaltungssystem zum Einsatz kommen kann. Dies steigert die Effizienz des Abbaubetriebs und spart zudem Energie. Insbesondere ist die mindestens eine Recheneinheit eingerichtet, den Abbaubetrieb entsprechend zu steuern.

Der mindestens eine Windsichter und die mindestens eine Einrichtung zur Bestimmung mindestens einer Eigenschaft der Fraktionen, insbesondere zur Durchführung einer Partikelgrö-βenanalyse, sind vorzugsweise in unmittelbarer Nähe zum Bohrgerät, insbesondere am Bohrgerät, angeordnet. Dadurch werden die Zeit zum Transport des Bohrkleins vom Entstehungsort zum Windsichter und die benötigte Analysezeit minimiert. Als Windsichter wird bevorzugt ein Querstromsichter eingesetzt.

In einer bevorzugten Ausgestaltung der Vorrichtung ist am mindestens einen Bohrgerät mindestens ein Körperschallsensor zur Erfassung eines, das aktuelle Bohrverhalten charakterisierenden Messwerts in Form eines Schwingverhaltens des Bohrgestänges des Bohrgeräts vorhanden. So lässt sich von der Vibration des Bohrgestänges auf die Eigenschaften des Gesteins, das momentan durchbohrt wird, schließen.

Die Figuren 1 bis 3 sollen eine mögliche Vorrichtung und ein mögliches Verfahren gemäß der Erfindung beispielhaft erläutern. So zeigt

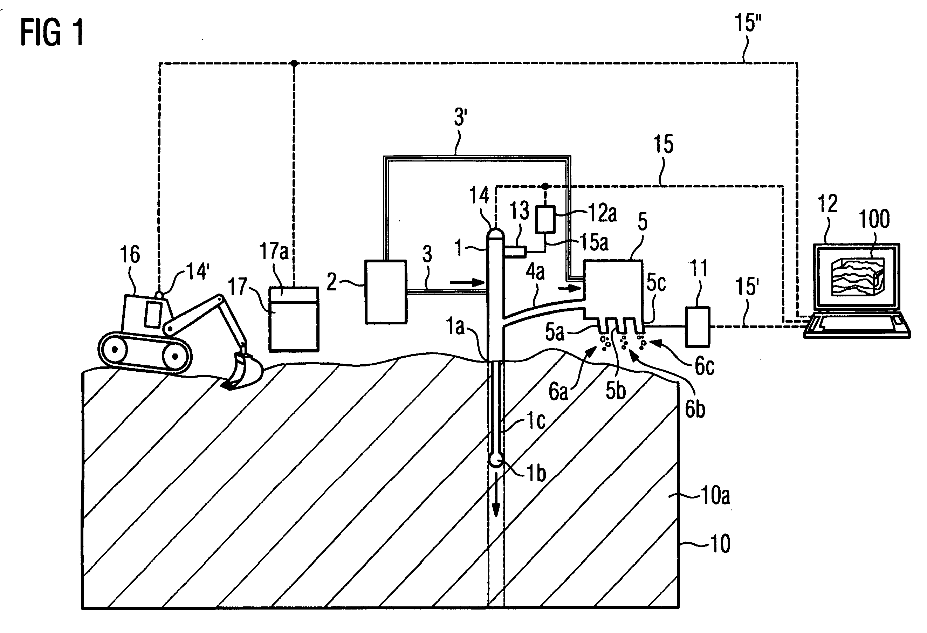

FIG 1 schematisch eine Vorrichtung zur Durchführung eines Verfahrens,
FIG 1 schematisch eine weitere Vorrichtung zur Durchführung eines Verfahrens,
FIG 3 schematisch einen Verfahrensablauf, und
FIG 4 schematisch die möglichen Daten- und Stoffströme für ein Verfahren.

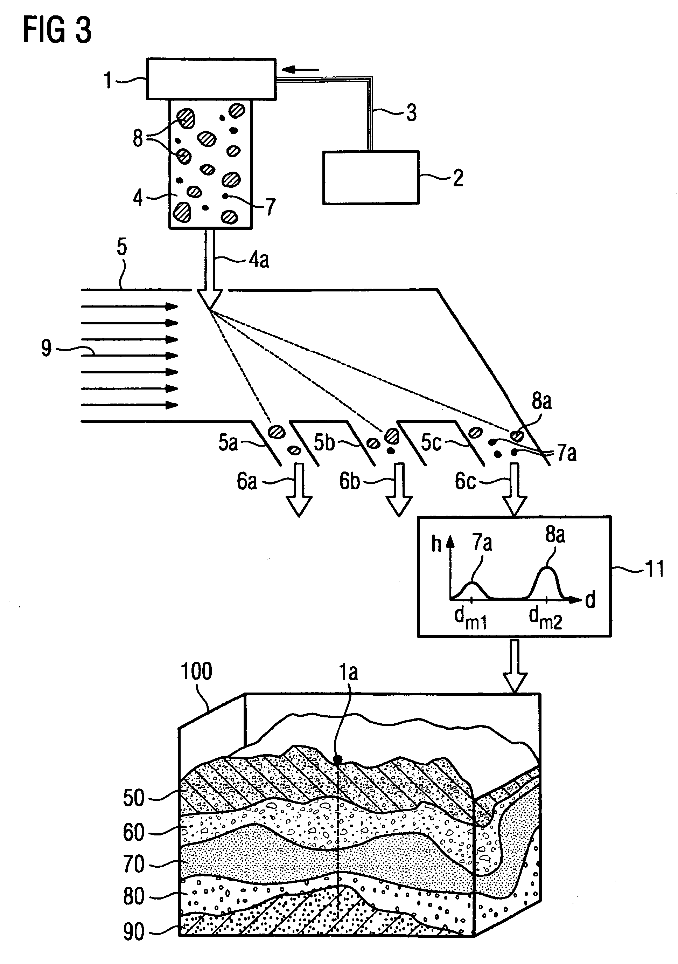

FIG 1 zeigt schematisch eine Vorrichtung zur Durchführung eines Verfahrens im Bereich einer Lagerstätte 10 mit im Schnitt dargestelltem Gestein 10a. Das Gestein 10a umfasst ein Wertstoff-Mineral in Form von Chalkopyrit und ein weiteres Mineral in Form von Quarz, wobei das Wertstoff-Mineral eine um das mindestens 1,5-fache höhere Dichte aufweist als das weitere Mineral. Die Vorrichtung umfasst im Bereich eines Bohransatzpunktes 1a ein Bohrgerät 1 mit einem Bohrmeißel 1b und einem Bohrgestänge 1c und eine Einheit 2 zur Bereitstellung eines Gasstroms zur Bildung eines Aerosols 4 zusammen mit dem am Bohrmeißel 1b entstehenden Bohrklein 7, 8 (vergleiche auch FIG 3). Die Einheit 2 zur Bereitstellung eines Gasstroms ist über mindestens eine Gasleitung 3 mit dem Bohrgerät 1 verbunden.

In dem Gestein 10a wird mittels des Bohrgeräts 1 ausgehend vom Bohransatzpunkt 1a ein Bohrvorgang durchgeführt, wobei das Bohrklein 7, 8 umfassend Partikel 7 aus Wertstoff-Mineral und Partikel 8 aus dem weiteren Mineral gebildet wird. Durch Einleiten des Gasstroms mittels der Einheit 2 über eine Gasleitung 3 in das Bohrgerät 1 in Richtung des Bohrmeißels 1b wird das Bohrklein 7, 8 vom Bohrmeißel 1b abtransportiert. Es bildet sich aus dem Bohrklein 7, 8 und dem Gasstrom ein fließfähiges Aerosol 4, das entgegen der Bohrrichtung an die Erdoberfläche befördert wird.

Weiterhin umfasst die Vorrichtung einen Windsichter 5, der mit dem Bohrgerät 1 über eine Aerosolleitung 4a verbunden ist. Das Aerosol 4 wird über die Aerosolleitung 4a vom Bohrgerät 1 zum Windsichter 5, hier in Form eines Querstromsichters, geleitet und eine Stromklassierung in der Gasströmung 9 durchgeführt, wobei das Bohrklein 7, 8 in drei Fraktionen 6a, 6b, 6c zerlegt wird. Diese umfassen jeweils gleichfällige Partikel des Bohrkleins 7, 8, d.h. es befinden sich beispielsweise in der Fraktion 6c sowohl kleine Partikel 7' aus Wertstoff-Mineral, als auch deutlich größere Partikel 8' des weiteren Minerals mit geringerer Dichte, die aufgrund der gleichen Sinkgeschwindigkeit gleich weit mit der Gasströmung 9 fortgetragen werden.

Zudem umfasst die Vorrichtung eine Einrichtung 11 zur Bestimmung einer Eigenschaft der am Windsichter 5 gebildeten Fraktionen 6a, 6b, 6c des Bohrkleins 7, 8. Jede Fraktion 6a, 6b, 6c umfasst jeweils gleichfällige Partikel des Bohrkleins 7, 8, d.h. es befinden sich beispielsweise in der Fraktion 6c sowohl kleine Partikel 7' aus Wertstoff-Mineral als auch deutlich größere Partikel 8' des weiteren Minerals mit geringerer Dichte, die aufgrund der gleichen Sinkgeschwindigkeit gleich weit mit der Gasströmung 9 fortgetragen werden.

Bei der Einrichtung 11 handelt es sich hier um eine optische Analyseeinheit zur Durchführung einer Partikelgrößenanalyse an den gleichfälligen Partikeln der Fraktionen 6a, 6b, 6c im jeweiligen Auswurfschacht 5a, 5b, 5c des Windsichters 5.

Es wird mittels der Einrichtung 11 an allen drei Fraktionen 6a, 6b, 6c eine Partikelgrößenanalyse durchgeführt. Diese kann sequentiell erfolgen, wird bevorzugt aber gleichzeitig für alle Fraktionen 6a, 6b, 6c durchgeführt, die aus den Auswurfschächten 5a, 5b, 5c des Windsichters 5 rieseln. Die Einrichtung 11 ist datentechnisch mit einer Recheneinheit 12 verbunden, wobei bevorzugt eine Datenübermittlung 15' per Funk erfolgt.

Der genaue Ablauf wird in FIG 3 beispielhaft für die Fraktion 6c gezeigt, die aus dem Auswurfschacht 5c des Windsichters 5 rieselt.

Es wird eine Häufigkeit h von Partikeln pro Partikelgröße d bzw. Partikeldurchmesser bestimmt. Es ergeben sich zwei Partikelfraktionen 7a, 8a mit unterschiedlichen mittleren Partikelgrößen dₘ₁, dₘ₂, die hier durch eine Ausfallkörnung voneinander getrennt vorliegen. Unter Ausfallkörnung wird hier ein Bereich verstanden, in dem für bestimmte Partikelgrößen keine Partikel vorhanden sind.

Nun wird die Partikelgrößenanalyse derjenigen Fraktion weiter ausgewertet, bei welcher der Abstand zwischen den zwei Partikelfraktionen maximal ist. Der Bereich der Ausfallkörnung ist hier demnach besonders groß. Hier wird nun angenommen, dass die Fraktion 6c dies erfüllt.

Die Partikelgröße d der ersten Partikelfraktion 7a der Fraktion 6c ist proportional der lokalen Mineralkorngröße des Wertstoff-Minerals in dem Gestein 10a und dient in Folge als Maß für den - teufenabhängigen - optimalen Zerkleinerungsgrad des Gesteins 10a in diesem örtlichen Bereich.

Die von der Einrichtung 11 ermittelten Partikelgrößenanalysen können entweder in der Einrichtung 11 ausgewertet werden und die Auswertung an die Recheneinheit 12 übermittelt werden, oder die Recheneinheit 12 übernimmt die Auswertung. Bei der Auswertung werden die Partikelfraktionen jeder Fraktion 6a, 6b, 6c analysiert und diejenige Fraktion ausgewählt, bei der ein Abstand zwischen einer ersten Partikelfraktion 7a und einer zweiten Partikelfraktion 7b, vorhanden und maximal ist.

Die Einrichtung 11 und/oder die Recheneinheit 12 dient/dienen somit der Erfassung der Partikelgrößen der ermittelten Partikelfraktionen und der Korrelation dieser mit einer lokalen Mineralkorngröße des Wertstoff-Minerals im Gestein 10a.

Um den Bohransatzpunkt 1a des Bohrgeräts 1 in der Lagerstätte 10 erfassen zu können, weist das Bohrgerät 1 mindestens eine GPS-Einheit 14 auf. Die Positionsdaten, insbesondere die aktuelle Teufe des Bohrmeißels 1b sowie die Bohrlochneigung, und mindestens ein das aktuelle Bohrverhalten charakterisierender Messwert, wie beispielsweise die Bohrgeschwindigkeit, werden insbesondere per Funk 15 an die räumlich vom Bohrgeschehen getrennt aufgestellte Recheneinheit 12 übermittelt.

Die Vorrichtung umfasst gemäß FIG 1 weiterhin ein Abbaugerät 16 zum Abbau des gewachsenen Gesteins 10a, das ebenfalls eine GPS-Einheit 14' aufweist. Die Positionsdaten des Abbaugeräts 16 werden insbesondere durch eine Datenübermittlung 15 " per Funk an die Recheneinheit 12 übermittelt. Das Abbaugerät 16 ist hier entweder durch einen Unstetigbagger, insbesondere einen Löffelbagger oder Flachbagger, oder einen Stetigbaggers, wie einem Schaufelradbagger oder Eimerkettenbagger, oder dergleichen gebildet.

Das Abbaugerät 16 übergibt das lokal abgebaute Gestein 10a mittelbar oder unmittelbar an ein Zerkleinerungsaggregat 17, welche eine Steuer- und/oder Regelungseinheit 17a zur Einstellung des optimalen Zerkleinerungsgrads umfasst. Je nach Abbauort des Gesteins 10a, welcher der Recheneinheit 12 aufgrund der GPS-Einheit 14' am Abbaugerät 16 bekannt ist, wird in Abhängigkeit von der zuvor ermittelten Mineralkorngröße an diesem Abbauort und der Abbauteufe dem Zerkleinerungsaggregat 17 bzw. seiner Steuer- und/oder Regelungseinheit 17a, bevorzugt von der Recheneinheit 12 mittels einer Datenübermittlung 15" per Funk, eine Stellgröße für den optimalen Zerkleinerungsgrad übermittelt. Selbstverständlich kann dies aber auch durch ein Bedienpersonal vor Ort erfolgen.

Der optimale Zerkleinerungsgrad wird dabei von der Recheneinheit 12 oder dem Bedienpersonal derart vorgegeben, dass das Wertstoff-Mineral freigelegt wird. Das Zerkleinerungsaggregat 17 zerkleinert nun nach entsprechender Einstellung seines Zerkleinerungswerkzeugs entsprechend dem jeweils vorgegebenen optimalen Zerkleinerungsgrad das Gestein 10a. Eine nahezu vollständige Abtrennung des freigelegten Wertstoff-Minerals von dem weiteren Mineral kann nun erfolgen, so dass eine effiziente Ausbeutung der Lagerstätte 10 durchgeführt wird.

Am Bohrgerät 1 ist bevorzugt weiterhin ein Körperschallsensor 13 installiert, welcher zur Erfassung eines, das aktuelle Bohrverhalten charakterisierenden Messwerts, hier des Schwingverhaltens des Bohrgestänges 1c des Bohrgeräts 1, dient. In Kenntnis der am Bohrgerät 1 vorgegebenen Bohrparameter und des Schwingverhaltens des Bohrgestänges 1c kann eine Abhängigkeit des Schwingverhaltens von den Bohrparametern rechnerisch mittels einer weiteren Recheneinheit 12a, welche in räumlicher Nähe zum Bohrgerät 1 angeordnet ist, eliminiert werden. Es ergibt sich ein Gesteinstextur-abhängiger Kennwert, der als ein weiteres Maß für eine lokale Mineralkorngröße des Wertstoff-Minerals und weiterhin insbesondere der Festigkeit des Gesteins zusätzlich herangezogen werden kann.

Die Daten zum Schwingungsverhalten sind so umfangreich, dass eine Datenübertragung dieser per Funk an die Recheneinheit 12 nur schwer realisierbar ist. Allerdings kann eine, in einer vor Ort installierten weiteren Recheneinheit 12a vorgenommener Auswertung der Schwingungsdaten per Funk von der weiteren Recheneinheit 12a an die entfernt angeordnete Recheneinheit 12 übermittelt werden.

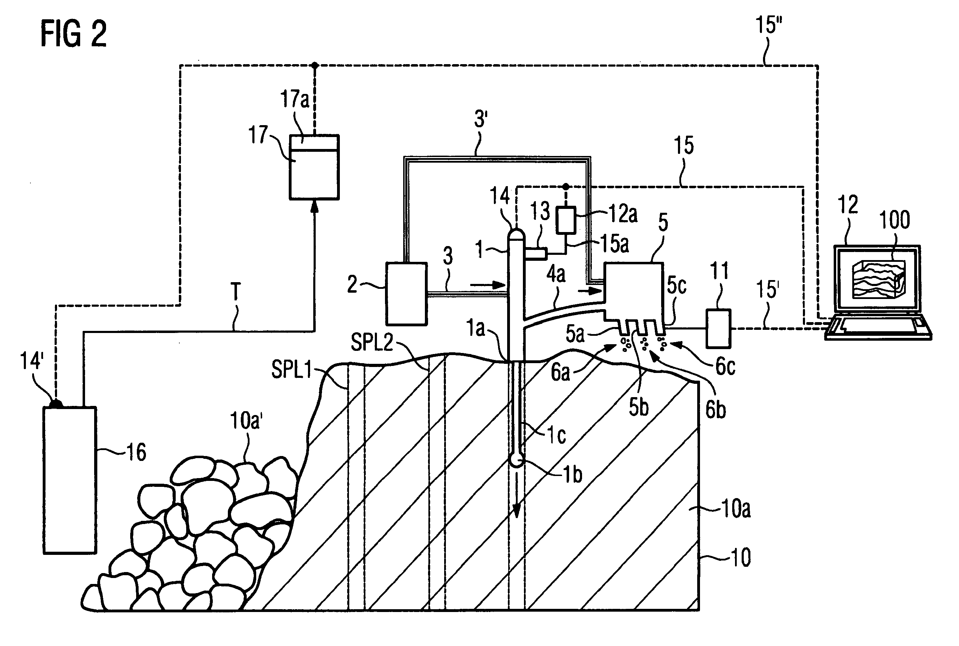

FIG 2 zeigt schematisch eine weitere Vorrichtung zur Durchführung eines Verfahrens im Bereich einer Lagerstätte 10 mit im Schnitt dargestelltem Gestein 10a. Gleiche Bezugszeichen wie in FIG 1 bezeichnen gleiche Elemente.

Im Unterschied zu FIG 1 ist hier das Gestein 10a mit Sprenglöchern SPL1, SPL2 versehen, welche das Bohrgerät 1 ausgebildet hat. Bevorzugt werden in einem horizontalen Abstand von 2 bis 5 m im Gestein 10a eine Anzahl von Sprengloch-Bohrungen eingebracht. Das Gestein 10a wird mittels einer Sprengung aus dem gewachsenen Gestein 10a herausgelöst, wobei anschließend das grob vorzerkleinerte Gestein 10a' über ein Abbaugerät 16, z.B. in Form eines Radladers, aufgenommen wird. Es kann nun, über ein Materialverwaltungssystem erfasst und daher wiederauffindbar, zwischengelagert werden oder direkt zum Zerkleinerungsaggregat 17 transportiert werden (siehe Pfeil T).

Aus den ermittelten lokalen Mineralkorngrößen des Wertstoff-Minerals wird ein dazu passender bzw. optimaler Zerkleinerungsgrad für das Gestein ermittelt und dem Gestein lokal zugeordnet. Bei einem nachfolgenden Abbau des Gesteins 10a wird das abgebaute Material entsprechend der Mineralkorngrö0e des enthaltenen Wertstoff-Minerals gelagert bzw. in Folge das Zerkleinerungsaggregat 17 für das entsprechende Material entsprechend gesteuert und/oder geregelt, wobei das Bedienpersonal oder die Recheneinheit 12 der Steuer- und Regelungseinheit 17a des Zerkleinerungsaggregats 17 eine entsprechende Stellgröße zur Einstellung des optimalen Zerkleinerungsgrads übermittelt.

Anhand der ermittelten Mineralkorngrößen des Gesteins an den unterschiedlichen Bohrstellen in der Lagerstätte 10 und insbesondere weiterhin bei unterschiedlichen Teufen des Bohrmei-βels im Gestein, kann bei einer entsprechend hohen Anzahl von Bohrstellen bzw. Sprenglöchern ein Lagerstättenmodell 100 erstellt werden, das ein hinreichend genaues dreidimensionales Abbild der Lagerstätte 10 wiedergibt. Im Lagerstättenmodell 100 ist die räumliche Lage 50, 60, 70, 80, 90 von Gestein mit unterschiedlicher lokaler Mineralkorngröße des Wertstoff-Minerals ersichtlich. Ausgehend vom Bohransatzpunkt 1a wurden fünf in unterschiedlicher Teufe liegende Gesteinsschichten mit Wertstoff-Mineral unterschiedlicher Mineralkorngröße ermittelt.

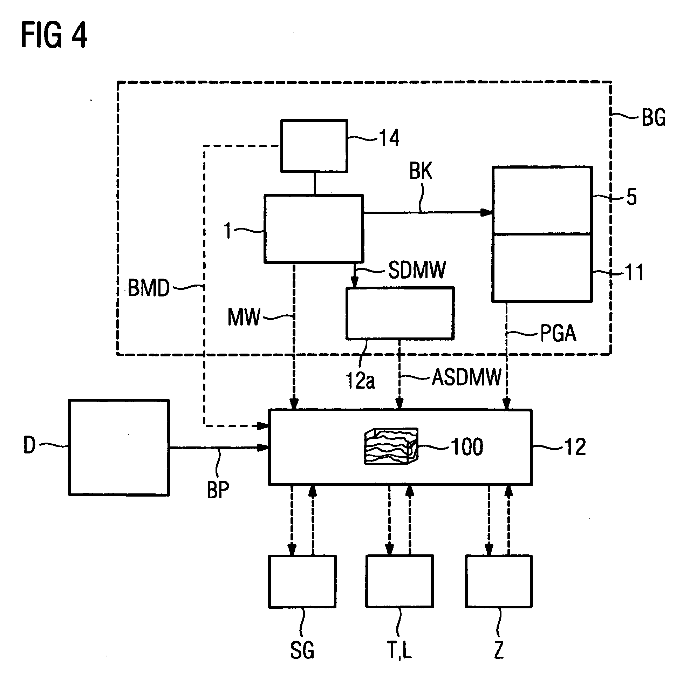

FIG 4 zeigt schematisch Daten- und Stoffströme für ein mögliches Verfahren. Die Recheneinheit 12 wird über eine Datenquelle D mit den in der Regel bekannten Bohrparametern BP versorgt, wobei als Datenquelle das Bedienpersonal und/oder sonstige elektronische Geräte dienen kann/können. Es werden Bohrparameter BP in Form von Daten zur Art des Bohrgeräts 1, des Typs und der Geometrie des Bohrmeißels des Bohrgeräts 1, der Einsatzdauer, während der der Bohrmeißel bereits betrieben wurde, des Andrucks und/oder der Drehzahl des Bohrmeißels usw. übertragen. Dabei kommt in der Regel eine drahtbehaftete Datenleitung zum Einsatz. Im Bohrbetrieb werden vom Bohrgerät 1 bzw. daran vorhandenen Messwertaufnehmern aktuelle, das Bohrverhalten charakterisierenden Messwerte MW an die Recheneinheit 12 übermittelt. Bei den Messwerten MW handelt es sich beispielsweise um eine Bohrgeschwindigkeit, einen Energieeintrag in das Bohrgerät 1 usw. Weiterhin werden von der GPS-Einheit 14 die aktuellen Positionsdaten BMD des Bohrgeräts 1, insbesondere des Bohrmeißels, an die Recheneinheit 12 übermittelt.

Das vom Bohrgerät erzeugte Bohrklein BK wird nach Bildung des Aerosols an den Windsichter 5 übermittelt und stromklassiert. Die aus den Auswurfschächten des Windsichters 5 austretenden Fraktionen werden von der mindestens einen Einrichtung 11 jeweils hinsichtlich der darin vorhandenen Partikelgrößenverteilungen analysiert. Die ermittelten Analysedaten PGA werden, ggf. nach einer weiteren Auswertung in der Einrichtung 11 hinsichtlich der Fraktion mit maximaler Ausfallkörnung, an die Recheneinheit 12 übermittelt.

Nachdem die Messwerte MW, die Positionsdaten BMD und die Partikelgrößenanalyse PGA im Bereich des Bohrgeschehens BG aufgenommen wurden, werden diese bevorzugt drahtlos (siehe gestrichelte Linien) an die räumlich getrennt davon angeordnete Recheneinheit 12 übermittelt.

Messwerte MW zum Bohrverhalten, die in Form von Schwingungsdaten SDMW vorliegen, werden in der weiteren Recheneinheit 12a direkt im Bereich des Bohrgeschehenes BG ausgewertet und anschließend drahtlos an die Recheneinheit 12 übermittelt.

Auf Basis des in der Recheneinheit ermittelten Modells 100 erfolgt nun eine Steuerung des Abbaubetriebs im Bereich der Lagerstätte 100, vor allem hinsichtlich einer Sprengung SG, eines Transports T und einer Lagerung L des abgebauten Gesteins sowie einer Gesteinszerkleinerung Z. So kann in Kenntnis des Modells 100 und ggf. der lokalen Festigkeit des Gesteins z.B. die lokal eingesetzte Menge an Sprengstoff angepasst werden, das abgebaute Gestein je nach Eigenschaft an unterschiedlichen Orten gelagert werden, wobei insbesondere Gestein gleicher Mineralkorngröße des Wertstoff-Minerals zusammenfasst wird, in gewünschter Reihenfolge zum Zerkleinerungsaggregat befördert und dort in Abhängigkeit von der Mineralkorngröße des Wertstoff-Minerals unterschiedlich stark zerkleinert werden.

Die Figuren 1 bis 4 zeigen dabei lediglich Beispiele für die Vorrichtung und das Verfahren auf. Ein Fachmann ist ohne weiteres in der Lage, die erfindungsgemäße Vorrichtung und das erfindungsgemäße Verfahren an die jeweilige Lagerstätte anzupassen, um die lokalen Mineralkorngrößen der vorhandenen Wertstoff-Minerale zu ermitteln und den dazu passenden Zerkleinerungsgrad für das jeweilige Gestein zu ermitteln. So kann natürlich, je nach Lagerstätte, auch vertikal und/oder horizontal und/oder schräg ins Erdreich gebohrt werden. Weiterhin kann eine andere Art von Windsichter und/oder andere Art von Einrichtung zur Partikelgrößenanalyse eingesetzt werden. So kann beispielsweise auch eine Siebklassierung der stromklassierten Fraktionen in die einzelnen Partikelfraktionen erfolgen, wobei dies allerdings zeitaufwendig ist.

## Patentansprüche

1. Verfahren zur Erhöhung einer Ausbeute einer Lagerstätte (10) umfassend ein Gestein (10a), das ein durch Zerkleinerung des Gesteins (10a) freizulegendes Wertstoff-Mineral und mindestens ein weiteres Mineral umfasst, wobei das Wertstoff-Mineral eine höhere Dichte aufweist als das mindestens eine weitere Mineral, mit folgenden Schritten:
- Durchführen eines Bohrvorgangs mittels eines Bohrgeräts (1) vor einem Abbau des Gesteins (10a), wobei Bohrklein (7, 8) erzeugt wird,
- Bilden eines Aerosols (4) umfassend das Bohrklein (7, 8) und einen Gasstrom,
- Überführen des Aerosols (4) vom Bohrgerät (1) zu mindestens einem Windsichter (5),
- Durchführen einer Stromklassierung, wobei mindestens zwei Fraktionen (6a, 6b, 6c) umfassend jeweils gleichfällige Partikel des Bohrkleins (7, 8) gebildet werden, und
- Bestimmen einer Eigenschaft mindestens einer der Fraktionen (6a, 6b, 6c), welche als ein Maß zur Einstellung eines optimalen Zerkleinerungsgrades des Gesteins (10a) verwendet wird.

2. Verfahren nach Anspruch 1,
**dadurch gekennzeichnet, dass** als Wertstoff-Mineral ein Erzmineral durch Zerkleinerung des Gesteins (10a) freigelegt wird.

3. Verfahren nach Anspruch 1 oder Anspruch 2,
**dadurch gekennzeichnet, dass** an den gleichfälligen Partikeln der Fraktionen (6a, 6b, 6c) eine Partikelgrößenanalyse durchgeführt wird, wobei mindestens in einer der Fraktionen (6a, 6b, 6c) mindestens zwei Partikelfraktionen (7a, 8a) mit unterschiedlichen mittleren Partikelgrößen (dₘ₁, dₘ₂) erhalten werden, die durch eine Ausfallkörnung voneinander getrennt sind, wobei die Partikelgrößen d einer ersten Partikelfraktion (7a) proportional einer lokalen Mineralkorngröße des Wertstoff-Minerals in dem Gestein (10a) sind und als Maß zur Einstellung des optimalen Zerkleinerungsgrades des Gesteins (10a) verwendet werden.

4. Verfahren nach Anspruch 3,
**dadurch gekennzeichnet, dass** im Fall, dass Partikelgrößenanalysen von mindestens zwei Fraktionen (6a, 6b, 6c) jeweils eine Ausfallkörnung zeigen, die Partikelgrößen d der ersten Partikelfraktion als Maß verwendet werden, die aus derjenigen Fraktion (6a, 6b, 6c) stammt, bei der die Ausfallkörnung am größten ist.

5. Verfahren nach Anspruch 3 oder Anspruch 4,
**dadurch gekennzeichnet, dass** die Partikelgrößenanalyse mittels einer optischen Analyse erfolgt.

6. Verfahren nach Anspruch 5,
**dadurch gekennzeichnet, dass** die optische Analyse der gleichfälligen Partikel der Fraktionen (6a, 6b, 6c) während ihres Falls erfolgt.

7. Verfahren nach einem der Ansprüche 1 bis 6,
**dadurch gekennzeichnet, dass** während des Bohrvorgangs eine Teufe eines Bohrmeißels (1b) des Bohrgeräts (1) und/oder Positionsdaten zur Position des Bohrgeräts (1) in der Lagerstätte (10) erfasst und logisch mit dem an dieser Stelle ermittelten Maß zur Einstellung des optimalen Zerkleinerungsgrades des Gesteins (10a) verknüpft werden, und dass an dieser Stelle abgebautes Gestein (10a) gemäß dem ermittelten Maß zerkleinert wird.

8. Verfahren nach einem der Ansprüche 1 bis 7,
**dadurch gekennzeichnet, dass** mindestens ein vorgegebener Bohrparameter und mindestens ein, ein aktuelles Bohrverhalten des Bohrgeräts (10) charakterisierender Messwert erfasst werden, eine Abhängigkeit des mindestens einen Messwerts von dem mindestens einen Bohrparameter rechnerisch eliminiert wird, und dass mindestens ein sich ergebender Gesteinstexturabhängiger Kennwert als ein weiteres Maß zur Einstellung eines optimalen Zerkleinerungsgrades des Gesteins (10a) verwendet wird.

9. Verfahren nach Anspruch 8,
**dadurch gekennzeichnet, dass** der mindestens eine Bohrparameter aus einem Andruck des Bohrmeißels (1b) des Bohrgeräts (1) und/oder einer Drehzahl des Bohrmeißels (1b) und/oder einem Gasvolumenstrom des Gasstroms zur Bildung des Aerosols (4) und/oder einer Schlagfrequenz des Bohrmeißels (1b) und/oder einer bisherigen Einsatzdauer des Bohrmeißels (1b) und/oder Material- oder Geometriedaten des Bohrmeißels (1b) gebildet wird.

10. Verfahren nach einem der Ansprüche 8 oder 9,
**dadurch gekennzeichnet, dass** der mindestens eine, das aktuelle Bohrverhalten charakterisierende Messwert aus der Gruppe an Messwerten umfassend eine Bohrgeschwindigkeit, ein resultierendes Drehmoment am Kraftdrehkopf des Bohrmeißels (1b), einen Gasdruck des Gasstroms zur Bildung des Aerosols (4), einen Energieeintrag in das Bohrgerät (1) und ein Schwingverhalten eines Bohrgestänges des Bohrgeräts (1) ausgewählt wird.

11. Verfahren nach einem der Ansprüche 1 bis 10,
**dadurch gekennzeichnet, dass** die bestimmte Eigenschaft weiterhin zur Steuerung eines Sprengbetriebs und/oder eines Transportbetriebs und/oder eines Materialverwaltungsbetriebs im Bereich der Lagerstätte (10) eingesetzt wird.

12. Vorrichtung zur Durchführung eines Verfahren nach einem der Ansprüche 1 bis 11, umfassend
- mindestens ein Zerkleinerungsaggregat (17) zur Zerkleinerung des Gesteins (10a), wobei ein Zerkleinerungsgrad des Gesteins (10a) veränderbar ist,
- mindestens eine Steuer- und/oder Regelungseinheit (17a) zur Einstellung des optimalen Zerkleinerungsgrads an dem mindestens einen Zerkleinerungsaggregat (17),
- mindestens ein Bohrgerät (1),
- mindestens eine Einheit (2) zur Bereitstellung des Gasstroms, welche über mindestens eine Gasleitung (3) mit dem mindestens einen Bohrgerät (1) verbunden ist,
- mindestens einen Windsichter (5) pro Bohrgerät (1), der mit dem mindestens einen Bohrgerät (1) über mindestens eine Aerosolleitung (4a) verbunden ist,
- mindestens eine Einrichtung (11) zur Bestimmung mindestens einer Eigenschaft der Fraktionen (6a, 6b, 6c), und
- mindestens eine Recheneinheit (12) zur Erfassung der mindestens einen bestimmten Eigenschaft der Fraktionen (6a, 6b, 6c), welche das Maß zur Ermittlung des optimalen Zerkleinerungsgrads bildet, und optional zur Übermittlung mindestens einer anhand des Maßes ermittelten Stellgröße an die mindestens eine Steuer- und/oder Regelungseinheit (17a) zur Einstellung des optimalen Zerkleinerungsgrads am mindestens einen Zerkleinerungsaggregat (17).

13. Vorrichtung nach Anspruch 12,
wobei die mindestens eine Recheneinheit (12) weiterhin zur Erfassung des mindestens einen Bohrparameters und/oder des mindestens einen Messwerts am Bohrgerät (1) eingerichtet ist.

14. Vorrichtung nach Anspruch 12 oder Anspruch 13,
wobei die mindestens eine Recheneinheit (12) weiterhin eingerichtet ist, eine Abhängigkeit des mindestens einen, ein aktuelles Bohrverhalten des Bohrgeräts (1) charakterisierenden Messwerts von dem mindestens einen Bohrparameter rechnerisch zu eliminieren und den mindestens einen Gesteinstexturabhängigen Kennwert zu errechnen, welcher ein weiteres Maß zur Ermittlung des optimalen Zerkleinerungsgrads bildet.

15. Vorrichtung nach Anspruch 14,
wobei die mindestens eine Recheneinheit (12) weiterhin eingerichtet ist, die Stellgröße anhand des Maßes und des weiteren Maßes zu ermitteln.

16. Vorrichtung nach einem der Ansprüche 12 bis 15,
wobei die mindestens eine Recheneinheit (12) weiterhin eingerichtet ist, die bestimmte Eigenschaft weiterhin zur Steuerung eines Sprengbetriebs und/oder eines Transportbetriebs und/oder eines Materialverwaltungsbetriebs im Bereich der Lagerstätte (10) einzusetzen.

17. Vorrichtung nach einem der Ansprüche 12 bis 16,
wobei der mindestens eine Windsichter (5) und die mindestens eine Einrichtung (11) zur Bestimmung mindestens einer Eigenschaft der Fraktionen (6a, 6b, 6c) in unmittelbarer Nähe zum Bohrgerät (1), insbesondere am Bohrgerät (1), angeordnet sind.

18. Vorrichtung nach einem der Ansprüche 12 bis 17,
wobei der mindestens eine Windsichter (5) ein Querstromsichter ist.

19. Vorrichtung nach einem der Ansprüche 12 bis 18,
wobei am mindestens einen Bohrgerät (1) mindestens ein Körperschallsensor (13) zur Erfassung eines Schwingverhaltens des Bohrgestänges (1c) des Bohrgeräts (1) vorhanden ist.

20. Vorrichtung nach einem der Ansprüche 12 bis 19,
wobei die Vorrichtung weiterhin ein Abbaugerät (16) für das Gestein (10a) umfasst.

21. Vorrichtung nach einem der Ansprüche 12 bis 20,
wobei das Bohrgerät (1) und/oder das Abbaugerät (16) mindestens eine GPS-Einheit aufweisen.

## Claims

1. Method for increasing the yield from a deposit (10) comprising a rock (10a) which comprises a valuable mineral which is to be exposed as a result of the rock (10a) being comminuted and at least one further mineral, wherein the valuable mineral has a higher density than the at least one further mineral, comprising the following steps of:
- carrying out a drilling operation using a drilling tool (1) prior to the rock (10a) being extracted, with drillings (7, 8) being generated in the process,
- forming an aerosol (4) comprising the drillings (7, 8) and a gas stream,
- transferring the aerosol (4) from the drilling tool (1) to at least one air separator (5),
- carrying out a hydraulic classification, wherein at least two fractions (6a, 6b, 6c) comprising in each case equal-falling particles of the drillings (7, 8) are formed, and
- determining a property belonging to at least one of the fractions (6a, 6b, 6c) and used as a measure for setting an optimum degree of comminution of the rock (10a).

2. Method according to claim 1,
**characterised in that** an ore mineral is exposed as the valuable mineral by comminution of the rock (10a).

3. Method according to claim 1 or claim 2,
**characterised in that** a particle size analysis is carried out on the equal-falling particles of the fractions (6a, 6b, 6c), wherein at least in one of the fractions (6a, 6b, 6c) at least two particle fractions (7a, 8a) having different mean particle sizes (dₘ₁, dₘ₂) are obtained which are separated from one another by gap grading, wherein the particle sizes d of a first particle fraction (7a) are proportional to a local mineral grain size of the valuable mineral in the rock (10a) and are used as a measure for setting the optimum degree of comminution of the rock (10a).

4. Method according to claim 3,
**characterised in that** in the case where particle size analyses of at least two fractions (6a, 6b, 6c) in each case exhibit gap grading, the particle sizes d of the first particle fraction are used as a measure which originates from that fraction (6a, 6b, 6c) in which gap grading is the greatest.

5. Method according to claim 3 or claim 4,
**characterised in that** the particle size analysis is carried out by means of an optical analysis.

6. Method according to claim 5,
**characterised in that** the optical analysis of the equal-falling particles of the fractions (6a, 6b, 6c) takes place during their fall.

7. Method according to one of claims 1 to 6,
**characterised in that** a depth of a drill bit (1b) of the drilling tool (1) and/or position data concerning the position of the drilling tool (1) in the deposit (10) are acquired during the drilling operation and are logically linked to the measure, determined at this location, for setting the optimum degree of comminution of the rock (10a), and **in that** rock (10a) extracted at this location is comminuted according to the determined measure.

8. Method according to one of claims 1 to 7,
**characterised in that** at least one predefined drilling parameter and at least one measured value characterising a current drilling behaviour of the drilling tool (1) are acquired, with a dependency of the at least one measured value on the at least one drilling parameter being computationally eliminated, and **in that** at least one resulting rock-texture-dependent characteristic value is used as a further measure for setting an optimum degree of communication of the rock (10a).

9. Method according to claim 8,
**characterised in that** the at least one drilling parameter is formed from a pressure of the drill bit (1b) of the drilling tool (1) and/or a rotational speed of the drill bit (1b) and/or a gas volume flow of the gas stream for forming the aerosol (4) and/or an impact frequency of the drill bit (1b) and/or a previous period of use of the drill bit (1b) and/or material or geometric data of the drill bit (1b).

10. Method according to one of claims 8 or 9,
**characterised in that** the at least one measured value characterising the current drilling behaviour is chosen from the group of measured values comprising a drill speed, a resulting torque on the top drive of the drill bit (1b), a gas pressure of the gas stream for forming the aerosol (4), an energy input into the drilling tool (1), and a vibration behaviour of a drill pipe of the drilling tool (1).

11. Method according to one of claims 1 to 10,
**characterised in that** the determined property is also used to control a blasting operation mode and/or a conveying operation mode and/or a material management operation mode in the region of the deposit (10).

12. Apparatus for carrying out a method according to one of claims 1 to 11, comprising
- at least one comminution machine (17) for comminuting the rock (10a), wherein a degree of comminution of the rock (10a) can be changed,
- at least one control and/or regulating unit (17a) for setting the optimum degree of comminution at the at least one comminution machine (17),
- at least one drilling tool (1),
- at least one unit (2) for providing the gas stream, which unit is connected by way of at least one gas line (3) to the at least one drilling tool (1),
- at least one air separator (5) per drilling tool (1) which is connected to the at least one drilling tool (1) by way of at least one aerosol line (4a),
- at least one device (11) for determining at least one property of the fractions (6a, 6b, 6c), and
- at least one computing unit (12) for acquiring the at least one determined property of the fractions (6a, 6b, 6c) which forms the measure for determining the optimum degree of comminution, and optionally for transmitting at least one manipulated variable, determined on the basis of the measure, to the at least one control and/or regulating unit (17a) for setting the optimum degree of comminution at the at least one comminution machine (17).

13. Apparatus according to claim 12,
wherein the at least one computing unit (12) is also configured for acquiring the at least one drilling parameter and/or the at least one measured value at the drilling tool (1).

14. Apparatus according to claim 12 or claim 13,
wherein the at least one computing unit (12) is also configured for computationally eliminating a dependency of the at least one measured value, characterising a current drilling behaviour of the drilling tool (1), on the at least one drilling parameter and for calculating the at least one rock-texture-dependent characteristic value which forms a further measure for determining the optimum degree of comminution.

15. Apparatus according to claim 14,
wherein the at least one computing unit (12) is also configured for determining the manipulated variable on the basis of the measure and the further measure.

16. Apparatus according to one of claims 12 to 15,
wherein the at least one computing unit (12) is also configured for using the determined property additionally to control a blasting operation mode and/or a conveying operation mode and/or a material management operation mode in the region of the deposit (10).

17. Apparatus according to one of claims 12 to 16,
wherein the at least one air separator (5) and the at least one device (11) for determining at least one property of the fractions (6a, 6b, 6c) are arranged in immediate proximity to the drilling tool (1), in particular on the drilling tool (1).

18. Apparatus according to one of claims 12 to 17,
wherein the at least one air separator (5) is a cross-flow separator.

19. Apparatus according to one of claims 12 to 18,
wherein at least one structure-borne noise sensor (13) for detecting a vibration behaviour of the drill pipe (1c) of the drilling tool (1) is present on the at least one drilling tool (1).

20. Apparatus according to one of claims 12 to 19,
wherein the apparatus also comprises an extraction tool (16) for the rock (10a).

21. Apparatus according to one of claims 12 to 20,
wherein the drilling tool (1) and/or the extraction tool (16) comprise/comprises at least one GPS unit.

## Revendications

1. Procédé d'augmentation du rendement d'un gisement (10) comprenant une roche (10a), qui comprend une matière minérale de valeur à dégager par fragmentation de la roche ( 10a ), et au moins un autre minéral, la matière minérale de valeur ayant une masse volumique plus grande que le au moins un autre minéral, comprenant les stades suivants :
- on effectue un forage au moyen d'un outil ( 1 ) de forage avant un abattage de la roche ( 10a ) en obtenant des débris ( 7, 8 ) de forage,
- on forme un aérosol ( 4 ) comprenant les débris ( 7, 8 ) de forage et un courant gazeux,
- on transfère l'aérosol ( 4 ) de l'outil ( 1 ) de forage à au moins un séparateur ( 5 ) à air,
- on effectue un criblage par courant en formant au moins deux fractions ( 6a, 6b, 6c ) comprenant respectivement des particules équitombantes des débris ( 7, 8 ) de forage, et
- on détermine une propriété d'au moins l'une des fractions ( 6a, 6b, 6c ) qu'on utilise comme valeur pour le réglage d'un degré de fragmentation optimum de la roche ( 10a ).

2. Procédé suivant la revendication 1,
**caractérisé en ce qu'**on dégage comme matière de valeur minérale un minéral de minerais par fragmentation de la roche ( 10a ).

3. Procédé suivant la revendication 1 ou la revendication 2, **caractérisé en ce qu'**on effectue sur les particules équitombantes des fractions ( 6a, 6b,6c ) une analyse de dimensions des particules, dans lequel, au moins dans l'une des fractions ( 6a, 6b, 6c ), on obtient au moins deux fractions ( 7a, 8a ) de particules ayant des dimensions ( dₘ₁, dₘ₂ ) de particules moyennes différentes qui sont séparées l'une de l'autre par une granulométrie, les dimensions d de particules d'une première fraction ( 7a ) de particules étant proportionnelles à une granulométrie minérale locale de la matière minérale de valeur dans la roche ( 10a ) et étant utilisées comme valeur de réglage du degré optimum de fragmentation de la roche ( 10a ).

4. Procédé suivant la revendication 3,
**caractérisé en ce que**, dans le cas où des analyses de dimensions de particules d'au moins deux fractions ( 6a, 6b, 6c ) montrent respectivement une granulométrie de défaut, on utilise les dimensions d de particules de la première fraction de particules comme valeur qui provient de la fraction ( 6a, 6b, 6c ), pour laquelle la granulométrie de défaut est la plus grande.

5. Procédé suivant la revendication 3 ou la revendication 4,
**caractérisé en ce qu'**on effectue l'analyse de dimensions des particules au moyen d'une analyse optique.

6. Procédé suivant la revendication 5,
**caractérisé en ce qu'**on effectue l'analyse optique des particules équitombantes des fractions ( 6a, 6b, 6c ) pendant leur chute.

7. Procédé suivant l'une des revendications 1 à 6,
**caractérisé en ce que**, pendant l'opération de forage, on détecte une profondeur d'un trépan ( 1b de l'outil ( 1 ) de forage et/ou des données de position de l'outil ( 1 ) de forage dans le gisement ( 10 ) et on les combine logiquement à la valeur déterminée en ce point pour le réglage du degré optimum de fragmentation de la roche ( 10a ) et **en ce qu'**on fragmente de la roche ( 10a ) abattue en ce point suivant la valeur déterminée.

8. Procédé suivant l'une des revendications 1 à 7,
**caractérisé en ce qu'**on détecte au moins un paramètre de forage prescrit et au moins une valeur de mesure caractérisant un comportement présent de forage de l'outil ( 1 ) de forage, on élimine par le calcul une dépendance de la au moins une valeur de mesure au au moins un paramètre de forage et on utilise au moins une valeur caractéristique de texture de roche qui s'ensuit comme une autre valeur de réglage d'un degré optimum de fragmentation de la roche ( 10a ).

9. Procédé suivant la revendication 8,
**caractérisé en ce qu'**on forme le au moins un paramètre de forage à partir d'une pression du trépan ( 1b ) de forage de l'outil ( 1 ) de forage et/ou d'une vitesse de rotation du trépan ( 1b ) de forage et/ou du courant en volume du courant gazeux pour la formation de l'aérosol ( 4 ) et/ou d'une fréquence de percussion du trépan ( 1b ) de forage et/ou d'une durée d'utilisation jusqu'ici du trépan ( 1b ) de forage et/ou de données de matériau ou de géométrie du trépan ( 1b ) de forage.

10. Procédé suivant l'une des revendications 8 ou 9,
**caractérisé en ce qu'**on choisit la au moins une valeur de mesure caractérisant le comportement présent de forage dans le groupe des valeurs de mesure comprenant une vitesse de forage, un couple de rotation qui s'ensuit sur la tête de rotation du trépan ( 1b ) de forage, une pression du gaz du courant gazeux pour la formation de l'aérosol ( 4 ), un apport d'énergie à l'outil ( 1 ) de forage et un comportement oscillant d'une tige de forage de l'outil ( 1 ) de forage.

11. Procédé suivant l'une des revendications 1 à 10, **caractérisé en ce qu'**on utilise la propriété déterminée, en outre, pour la commande d'un abattage par explosif et/ou d'un transport et/ou d'une gestion de matériau dans la zone du gisement ( 10 ).

12. Installation pour effectuer un procédé suivant l'une des revendications 1 à 11, comprenant :
- au moins un groupe ( 14 ) de fragmentation pour la fragmentation de la roche ( 10a ) à un degré de fragmentation de la roche ( 10a ) pouvant être modifié,
- au moins une unité ( 17a ) de commande et/ou de régulation pour le réglage du degré optimum de fragmentation sur le au moins un groupe ( 17 ) de fragmentation,
- au moins un outil ( 1 ) de forage,
- au moins une unité ( 2 ) de mise à disposition du courant gazeux, qui communique par au moins un conduit ( 3 ) pour du gaz avec le au moins un outil ( 1a ) de forage,
- au moins un séparateur ( 5 ) à air par outil ( 1 ) de forage, qui communique avec le au moins un outil ( 1 ) de forage par au moins un conduit ( 4a ) pour un aérosol,
- au moins un dispositif ( 11 ) de détermination d'au moins une propriété des fractions ( 6a, 6b, 6c ), et
- au moins une unité ( 12 ) informatique pour la détection de la au moins une propriété déterminée des fractions ( 6a, 6b, 6c ), qui forme la valeur pour la détermination du degré optimum de fragmentation et éventuellement pour la transmission d'au moins une grandeur de réglage déterminée au moyen de la valeur à la au moins une unité ( 17a ) de commande et/ou de régulation pour le réglage du degré optimum de fragmentation sur au moins un groupe ( 17 ) de fragmentation.

13. Installation suivant la revendication 12,
dans laquelle la au moins une unité ( 12 ) informatique est conçue, en outre, pour la détection du au moins un paramètre de forage et/ou de la au moins une valeur de mesure sur l'outil ( 1 ) de forage.

14. Installation suivant la revendication 12 ou la revendication 13,
dans laquelle la au moins une unité ( 12 ) informatique est conçue, en outre, pour éliminer par le calcul une dépendance de la au moins une valeur de mesure caractérisant un comportement de forage présent de l'outil ( 1 ) de forage du au moins un paramètre de forage et pour calculer une valeur caractéristique dépendant de la texture de la roche et formant une autre valeur pour la détermination du degré optimum de fragmentation.

15. Installation suivant la revendication 14,
dans laquelle la au moins une unité ( 12 ) informatique est conçue, en outre, pour déterminer la grandeur de réglage au moyen de la valeur et de l'autre valeur.

16. Installation suivant l'une des revendications 12 à 15,
dans laquelle la au moins une unité ( 12 ) informatique est conçue, en outre, pour utiliser la propriété déterminée, en outre pour la commande d'un abattage par explosif et/ou d'un transport et/ou d'une gestion de matériau dans la zone du gisement ( 10 ).

17. Installation suivant l'une des revendications 12 à 16,
dans laquelle le au moins un séparateur ( 5 ) à air et le au moins un dispositif ( 11 ) de détermination d'au moins une propriété des fractions ( 6a, 6b, 6c ) sont placés à proximité immédiate de l'outil ( 1 ) de forage, notamment sur l'outil ( 1 ) de forage.

18. Installation suivant l'une des revendications 12 à 17,
dans laquelle le au moins un séparateur ( 5 ) à air est un séparateur à courant transversal.

19. Installation suivant l'une des revendications 12 à 18,
dans laquelle il y a sur au moins un outil ( 1 ) de forage au moins un capteur ( 13 ) de bruit de corps pour la détection d'un comportement à l'oscillation de la tige ( 1c ) de forage de l'outil ( 1 ) de forage.

20. Installation suivant l'une des revendications 12 à 19,
dans laquelle l'installation comprend, en outre, un outil ( 16 ) d'abattage de la roche ( 10a ).

21. Installation suivant l'une des revendications 12 à 20,
dans laquelle l'outil ( 1 ) de forage et/ou l'outil ( 16 ) d'abattage ont au moins une unité GPS.
